(19) Europäisches Patentamt
European Patent Office
Office européen des brevets

(11) **EP 1 666 847 A2**

(12) **EUROPÄISCHE PATENTANMELDUNG**

(43) Veröffentlichungstag:
07.06.2006 Patentblatt 2006/23

(51) Int Cl.:
*G01D 5/245* (2006.01)

(21) Anmeldenummer: 05019150.1

(22) Anmeldetag: 02.09.2005

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **20.09.2004 DE 102004045849**

(71) Anmelder: **Rodi, Anton**
**69181 Leimen (DE)**

(72) Erfinder: **Rodi, Anton**
**69181 Leimen (DE)**

(54) **Messgeber mit Absolutsignalverarbeitung und Inkremental-Signalausgabe**

(57)   Es wird eine Messgeber-Vorrichtung zur Ermittlung absoluter Winkel- oder Wegstrecken beschrieben, bei der der Abstand von der Ist- zur Referenzposition bei Veranlassung ermittelt und über Inkrementalsignale ausgegeben wird. Mit diesem Messgeber werden neue Funktionen für das bisher eingesetzte Inkremental-Messsystem geboten. Auch wird der Übergang zum Absolutmesssystem bedarfsgerecht ermöglicht.

Fig. 5

EP 1 666 847 A2

## Beschreibung

Für Messung von Winkel- bzw. Wegstrecken sind im Industrieeinsatz zwei Ausführungstypen bekannt, die Inkremental- und Absolut-Messgeber.

Die Inkremental-Messgeber erfassen die inkrementell ausgebildeten Maßstäbe/Maßscheiben mittels Abtasteinrichtung, die dann als Inkremental-Signale an eine Steuerung zur Auswertung weitergeleitet werden. Die Inkremental-Signale werden überwiegend in bekannten Halbleiter-Pegelsignalen mit sogenannten A-, B- und R-Spuren ausgeführt. Die B-Spur ist um ca. 90° der Inkremental-Periode zur A-Spur versetzt, um die Richtung der Bewegung zu erfassen. Die R-Spur bzw. Referenz-Spur gibt z.B. bei Drehgebern die Bezugslage während der Umdrehung bzw. beim Längengeber die Bezugslage zum Maßstab an. Auch sind die Inkremental-Signale in sin-/cos-Signalen (A-, B-Signale) gelegentlich ausgeführt, wenn störbehaftete und lange Übertragungsleitungen vorliegen und die übergeordnete Steuerung höhere Auflösungen von Inkremental-Strecken selbst noch erzeugen soll.

Die Inkremental-Messgeber sind weit verbreitet, da diese Vorteile in der kostengünstigen Herstellung der Maßstäbe und Abtasteinrichtung sowie Auswertung in der Steuerung gegenüber der Absolut-Messgebem aufwiesen.

Die Absolut-Messgeber erfassen die entsprechend ausgebildeten Maßstäbe/Maßscheiben bzw. Rotoren/Statoren durch geeignete Abtasteinrichtungen mit Signalverarbeitung, die dann zu Messwerten gebildet in einer übergeordneten Steuerung als Absolutwerte weiterverarbeitet werden. In der Servotechnik mit hochaufgelösten Winkel- bzw. Wegstrecken wurde eine Auftrennung der Messsignale im Messgeber in binäre BasisAbsolutwerte und sinusförmige Inkrement-Signale vorgenommen und an die Steuerung zur Bildung des Gesamtabsolutwertes separat übertragen. Seit der Hannover-Messe 2000 sind Absolutgeber bekannt, die im Messgeber die gesamte Signalverarbeitung zum Gesamtabsolutwert vornehmen und diesen seriell, z.B. über eine SSI-Schnittstelle, an die Steuerung als kompletten Messwert übertragen. Die Patentanmeldung EP 1102039 A1 beschreibt eine solche Winkel- und Wegmesseinrichtung.

Die zunehmende Integrationsfähigkeit der Messelektronik begünstigt die kostengünstigere Realisierung von Funktionen bei Absolut-Messgebern, so dass die Inkremental-Messgeber zunehmend bei Neuentwicklungen ersetzt werden. Hinderlich im Prozess der Umstellung auf Absolutmessgeber sind die gleichzeitigen Maßnahmen bei den Messgeber-Herstellem, den Maschinen- und Gerätebauem sowie Steuerungs-Herstellem. Die Ersatzteilhaltung, sowohl von Messgebern als auch Steuerungen bei langlebigen Produkten, erschwert zusätzlich den Umstellprozess. Es bedarf daher besonderen Anstrengungen und Gestaltungsmaßnahmen, um den Einsatz solcher Messgeber-Ausführungen zu ermöglichen.

Die erfinderische Lösung trägt in vorteilhafter Weise dazu bei, den Prozess der Umstellung auf die Absolut-Messgebertechnik zu erleichtern und dazu die evolutionäre Ausführung von Inkremental-Messgebem sowohl für den Messgeber- als auch Anlagen-, Maschinen- und Geräte- sowie Steuerungs-Hersteller kurzfristig zu ermöglichen und einzuleiten.

Der Grundgedanke bei der Lösung beruht auf der weiterführenden Ausgestaltung des Messgebers mit Abtasteinrichtung zur Bildung von absoluten Winkel- oder Wegstrecken und Ausgabe von Messwerten mittels richtungsabhängigen Inkrementalsignalen. Dies wird gemäß der Ausführung und Verfahren in den aufgeführten Ansprüchen erreicht.

In der Patentschrift CH 683641A5 wird eine Schnittstelle zu Absolutgeber mit Verfahren und Ausführung beschrieben, mit der Inkrementalsignale durch Wandlung der Ausgangssignale des Absolutgebers gewonnen werden. Diese Ausgangssignale werden dann über eine Weiterverarbeitungseinheit in gleicher Art weiterverarbeitet wie diejenigen eines Inkrementalgebers, wobei aber die physische Nullfahrt durch eine virtuelle Nullfahrt ersetzt wird. Abgesehen von dem zusätzlichen Aufwand an Elektronik zur Durchführung des Verfahrens der separaten Schnittstelle und dem zusätzlichen Platzsowie Einbauaufwand in dem Absolutgeber, hat das Verfahren samt Ausführung markante Nachteile. So wird vorausgesetzt, dass die Referenzlage den Bezugspunkt zum Absolutmesswert bildet, die sogenannte Nulllage. Dies trifft aber bei vielen Absolut-Messgebem nicht zu, z.B. bei einem Linearpositionsgeber, dessen Absolutmesswert auf die Maßstabslänge bezogen bleibt und eine Referenzposition beliebig vorgegeben werden kann. Auch erlaubt das Verfahren nur die virtuelle Nullfahrt annähernd bei Stillstand, wenn die Fehler durch Betriebsbewegung im tolerierbaren Bereich bleiben sollen. Daher werden die Initialisierungen solcher virtuellen Nullfahrten lediglich beim Einschalten oder nach einem Strom- bzw. Netzunterbruch eingeleitet und nach abgeschlossener Nullfahrt erst der Betrieb freigegeben. Es ist somit die Nullfahrt auch bei kleinen Betriebsgeschwindigkeiten nicht erlaubt, so dass diese auf die Zustände stehender Verstelleinrichtungen reduziert werden muss. Dies ist nachteilig, da generell während dem gesamten Betriebsablauf die übergeordnete Steuerung die Inkrementalimpulse permanent fehlerfrei erfassen und auch verarbeiten muss, und nur die Nullfahrt die Überprüfung erlaubt. Bei einem ununterbrochenen Betrieb, z.B. von 2 Stunden und mittleren Verstellgeschwindigkeiten von 1 m/sec ohne Erreichung der Nullposition und Messauflösung von ca. 1 $\mu$m, sind ca. $7 \cdot 10^{12}$ Impulse störfrei zu übertragen und zu erfassen, wenn keine Fehlpositionierung erlaubt wird. Dies ist bereits im kritischen Bereich im Betriebseinsatz industrieller Nutzung und bildet ein Versäumnis bei dieser Lösung, da gerade die Absoluterfassung von Messwerten permanent die Überwachung der Position erlaubt und nicht beliebig genutzt werden kann.

Die erfindungsgemäße Ausführung erlaubt die Erfassung der Referenzposition zu jedem Zeitpunkt im gesamten Betriebseinsatz und trägt im erheblichen Maße dazu bei, die Zuverlässigkeit und Sicherheit inkrementeller Messübertragungen weit über bisher bekannte Inkremental-Messsysteme zu erhöhen. Darüber hinaus werden zusätzliche Funktionen bezüglich Positionsabfragen und Multitum-Auswertungen ermöglicht, um so die Inkremental-Messverarbeitung zu erweitern und den gewünschten Übergang zur universellen Anwendung von Inkremental- zu Absolutmessgebem zu schaffen.

Zur Bildung von Absolut-Messwerten durch entsprechende Abtasteinrichtungen und Maßstäbe werden weder an das physikalische Wirkprinzip, z.B. optisch, magnetisch, induktiv, kapazitiv, akustisch usw., noch an die Ausführung spezielle Voraussetzungen gestellt. Die derzeitigen Auflösungen solcher Messsysteme bewegen sich zunehmend im $\mu$m-Bereich und darunter, sowie für Messgeschwindigkeiten bis zu 10 m/sec. Damit eine Vielzahl von Funktionen realisiert werden kann, ist es vorteilhaft, wenn die Wandlungen der überwiegend analogen Sensor-Signale in digitale Messwerte in möglichst kurzen Zeitintervallen erfolgen, z.B. $\geq$10Bit in $\leq$30nsec und näher in der Patentschrift US 6,741,199 beschrieben wird.

Die nachstehenden Beschreibungen geben nähere Hinweise auf die erfinderischen Ausführungen und Verfahren wieder. Dabei zeigen:

Fig.1:     Ein übliches Inkremental-Messsystem
Fig.2:     Ein übliches Absolut-Messsystem
Fig.3:     Ein Absolut-Messgeber neuerer Generation
Fig.4:     Eine Variante des Messgebers nach erfinderischer Ausführung und erfinderischem Verfahren
Fig.5:     Weiterführende Variante des Messgebers nach erfinderischer Ausführung und erfinderischem Verfahren
Fig.6:     Weitere Ausbildungsvariante für die erfinderische Lösung
Fig.7:     Diagramm für Abläufe von Singletum-Messgebersignalen nach Fig.4
Fig.8:     Diagramm für Messgebersignale und Messdaten nach Fig.5
Fig.9:     Diagramm für Multitum-Messgebersignale nach Fig.4
Fig.10:    Blockdiagramm für Messsignal- und Messdatenverarbeitung im erfindungsgemäßen Messgeber.
Fig.11:    Diagramm mit verschiedenen Betriebszuständen und Auflösungen von Winkel- oder Wegstrecken.

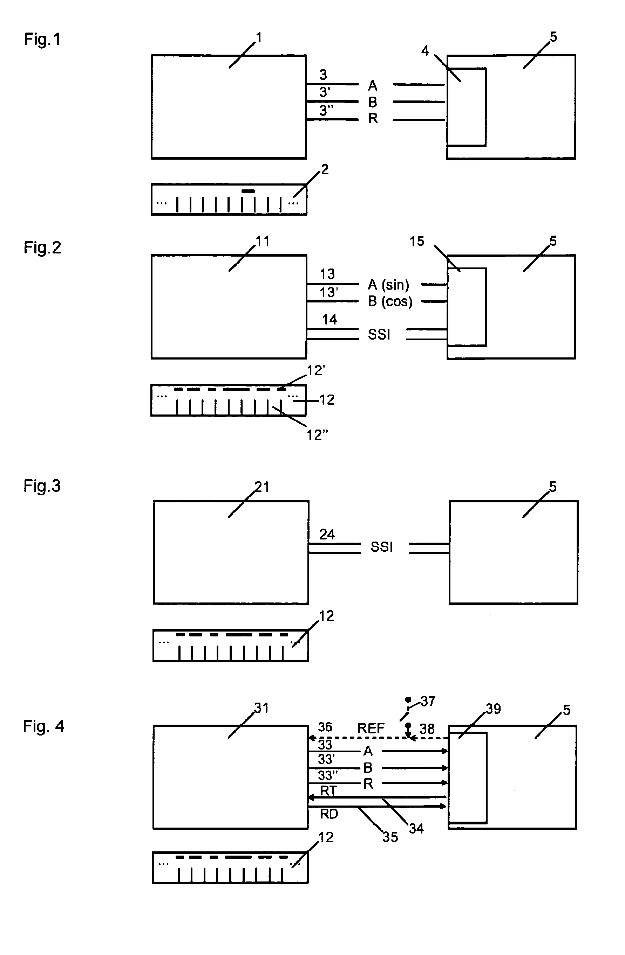

**Figur 1** zeigt einen handelsüblichen Messgeber (1) mit Maßstab (2) für Inkremental-Messungen (1, 2) und Messverarbeitung (4) der A-, B-, R-Signale (3, 3', 3") in der übergeordneten Steuerung (5). Aus den A-, B-, R-Signalen werden zählerisch von einer Referenzposition die bei relativer Bewegung zwischen Maßstab (2) und Messgeber (1) anfallenden digitalen Inkrementalsignale (high, low) nach Richtung erfasst und in der Steuerung zu Messwerten für die Istposition ausgewertet. Es ist üblich, die Inkremental-Signale auf ein Zeitbezug bezogen auszuwerten, z.B. mittels eines ohnehin vorhandenen Taktgenerators bzw. Oszillators für die synchrone Signalauswertung bei der digitalen Logik, um die Verstellgeschwindigkeit der Messeinrichtung zu ermitteln. Bei höheren Auflösungen der Inkremental-Messeinrichtung, z.B. durch analoge Signalübertragung von A-/B-Signalen (3, 3') im sin-/cos-Verlauf und hochgenauer Analog-Digital-Wandlung in der Messverarbeitung (4), werden die Messdaten bezüglich Position (Lage), Geschwindigkeit und sogar die Beschleunigung ermittelt. Dies ist aber nur begrenzt möglich, da z.B. für digitale A-/B-Signalübertragung die Frequenz $f_T$ auf ca. 100 bis 200 kHz bei höchster Betriebsgeschwindigkeit beschränkt ist. Daraus ist zwangsläufig die Auflösung solcher Inkremental-Messgeber im Betriebseinsatz eingeschränkt. Für z.B. maximale Drehzahlen n = 6000/min (entspricht $f_D$ = 100 Hz) und Umfang U der Messscheibe von ca. 100 mm, ergibt sich die Auflösung S

$$S = \frac{U}{2^{nBit}} \; ; \qquad\qquad S \cdot f_T = U \cdot f_D; \qquad f_T = 100...200 \text{ kHz}$$

$$S = U \cdot f_D/f_T \; ; \qquad f_D = n/60 \approx 100 \text{ Hz}$$

$$\frac{1}{2^{nBit}} = \frac{f_D}{f_T} \qquad \rightarrow \qquad 2^{nBit} = \frac{f_T}{f_D} = \frac{100...200 \text{ kHz}}{100 \text{ Hz}} = 10...20 \cdot 10^3$$

was einer Auflösung nBit $\approx$ 13...14 Bit entspricht und somit auf die ca. 10.000 Inkremente maximal pro Umfang und Umdrehung begrenzt ist.

Gerade bei niederen Betriebsgeschwindigkeiten bis zum Stillstand fordert man die höchste Positionsgenauigkeit sowie Auflösung und Ableitung von der Geschwindigkeit sowie Beschleunigung. Dies wird aber wegen der maximalen Frequenz $f_T$ der Signalübertragung bei der höchsten Drehfrequenz (Drehzahl) $f_D$ begrenzt, und ist bei zunehmender Positionsgenauigkeit oft nicht mehr ausreichend gewährleistet. Zusätzlich wird durch die hohe Auflösung zwangsläufig die Erfassung der Vielzahl von Impulsen durch die Steuerung unsicher und fehlerhaft. Dies kann man statistisch auf die Fehlerhäufigkeit der Übertragungsstrecke und Auswerteeinheit zurückführen. Aber auch bei Störungen durch Netzverhältnisse oder durch Interrupts in der Steuerung sind fehlerhafte Impulszählungen zu erwarten, die einer nicht immer durchführbaren Referenzfahrt bis zur Referenzmarke zur Überprüfung der Referenzposition und damit der Istposition bedürfen. Im Vergleich zu Absolut-Messgeber sind die bekannten Inkrementalgeber, was die Auflösung sowie Zuverläsigkeit und Sicherheit der Messwerte samt Übertragung betrifft, im Nachteil.

Grundsätzlich sei ausgeführt, dass sich der Maßstab (2) innerhalb oder außerhalb des Messgebers (1) befinden kann, und die Messwertverarbeitung (4) innerhalb, an der Steuerung (5) oder außerhalb angebracht werden kann. Dies gilt auch für die nachfolgend beschriebenen Figuren 2 bis 6 in gleichem Maße.

**Figur 2** zeigt einen sogenannten SinCos-Absolut-Messgeber (11) mit einem Absolut-Maßstab (12), der eine Absolutkodierung (12', PRC- oder Gray-Code) mit sin-/cos-Signalverläufen erfassbare Teilstrecken (12") aufweist. Die Inkrementalsignale werden als sin-/cos-förmige A-/B-Signale (13, 13') an die Messverarbeitung (15) der übergeordneten Steuerung permanent übertragen. Die Basisabsolutwerte, also die Absolutwerte der Teilstrecken, werden über eine serielle Schnittstelle (14) auf Anfrage übermittelt.

Die Messverarbeitung erfasst die Bezugslage dieses Absolutwertes und setzt den aus den A-/B-Signale (13, 13', sin/cos) gewonnenen Feinabsolutwert mit dem Basisabsolutwert zu einem Gesamtabsolutwert für die Steuerung zusammen. Diese Ausführung der höher auflösenden Absolutgeber hat den Vorteil, dass die Basisabsolutwerte für die Referenzposition ohne Referenzfahrt herangezogen werden können - wenn auch nur begrenzt bei stehender bzw. relativ langsam bewegender Messfahrt - und die Bandbreite der Signalübertragung durch die sin-/cos-Inkrementalwerte merklich herabgesetzt wird. Nachteilig ist nach wie vor die getrennte Messsignalerfassung im Geber (11) und die davon getrennte Messdatenverarbeitung in der Steuerung (15, 5). Zusätzlich macht sich der Aufwand an separater Elektronik, Kabel und Stecker bemerkbar für die nach wie vor störempfindliche sin-/cos-Signalübertragung und die nach wie vor unsichere zählerische Zusammensetzung des Feinabsolutwertes in der Steuerung (15, 5) mit dem sporadisch abfragbaren Basisabsolutwert zum Gesamtabsolutwert.

**Figur 3** zeigt die Ausführung des Absolut-Messgebers (21) mit dem Absolut-Maßstab (12), bei dem sich das gesamte Messsystem im Messgeber (21) befindet und die Gesamtabsolutwerte der Winkel- bzw. Wegstrecken z.B. mittels binären Datenformaten über eine serielle Schnittstelle (24), z.B. in SSI-Ausführung, an die Steuerung (5) übertragen werden. Diese Systemübertragung benötigt den geringsten Stecker- und Kabelaufwand und hat die höchste Sicherheit in der Signal-Aufbereitung sowie Messdatenverarbeitung. Die störbehafteten Analog-Signalübertragungen samt dem zusätzlichen Elektronikaufwand in der Steuerung (5) entfallen, und das Messsystem kann sich jederzeit redundant selbst überwachen und die Fehler oder Ausfälle im Messgeber melden. Die Integration der Elektronik des gesamten Messgebers samt Sensoren mittels ASIC ermöglicht die kostengünstigste und höchstauflösende Messsignalverarbeitung in hoher Zuverlässigkeit. Auch lassen sich Messdatenübertragung und Parametrierung über die serielle Schnittstelle in einigen Mikrosekunden durchführen. Dazu haben nicht zuletzt Interpolatoren mit höchster Auflösung sowie Messdatenverarbeitung unterhalb 30nsec beigetragen, wie dies z.B. in der Patentschrift US 6,741,199 näher erläutert wird.

Zusätzlich zeichnen sich neue Absolutmesssysteme ab, die die Ausführungen von Maßstäben bzw. Maßscheiben samt Abtasteinrichtung vereinfachen, wie dies z.B. durch die Patentanmeldung DE 10117 193.5 beschrieben wird. Die Nachteile der festkodierten Maßstabsspuren auf der gesamten Messlänge werden beseitigt und eine kostengünstige sowie auf beliebige Maßstabs-Länge und -Durchmesser bezogene Erfassung von Absolut-Messwerten ermöglicht. Danach sind Absolutmesssysteme flexibel auf den Durchmesser von Maßscheiben bezogen zu realisieren und begünstigen die Inkremental-Ausführungen der erfindungsgemäßen Gestaltung mittels der Absolut-Messsignalverarbeitung.

**Figur 4** benutzt die absolute Messsignalerfassung und Messverarbeitung wie sie z.B. in der Figur 3 vorteilhaft beschrieben wurde. Der Messgeber (31) mit Maßstab (12) hat somit die Absolut-Messdatenverarbeitung mit der erfindungsgemäßen inkrementellen Ausgabe von mindestens A-/B-Signalen (33, 33') an die Messverarbeitung (39) der Steuerung (5). Dabei sind die erfindungsgemäße Veranlassung (34) zur Ausgabe des Abstandes des Istwertes zur Referenzposition - künftig RT (34) genannt - und die Ausgabe (35) des Abstands von Beginn bis deren Ende erfasst und zur Auswertung angegeben wird - künftig RD (35) genannt - zwischen Messgeber (31) und Messverarbeitung (39) samt Steuerung (5) angeführt. Je nach Bedarf wird die R-Spur (33") auch vom Messgeber (31) herausgeführt, insbesondere zur Angabe der eingegebenen Referenzposition während der Messfahrt und im Multitum-Betrieb zur Ausgabe von Referenzpositionswerten des Messgebers (31) bei der erfindungsgemäßen Veranlassung RT (34). In der Figur 4 wird die Eingabe (36) der Referenzposition an den Messgeber (31) - künftig REF (36) genannt -, z.B. über eine separate Eingabestelle mittels eines Endschalters (37), oder von der Messverarbeitung (39) der Steuerung (5) mittels einer Signalausgabe (38) selbst vorgenommen.

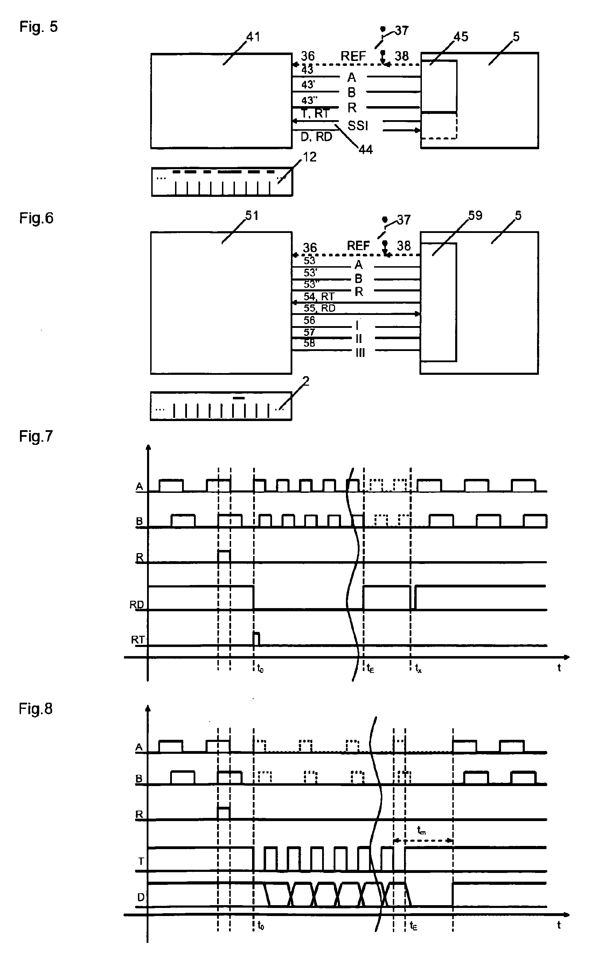

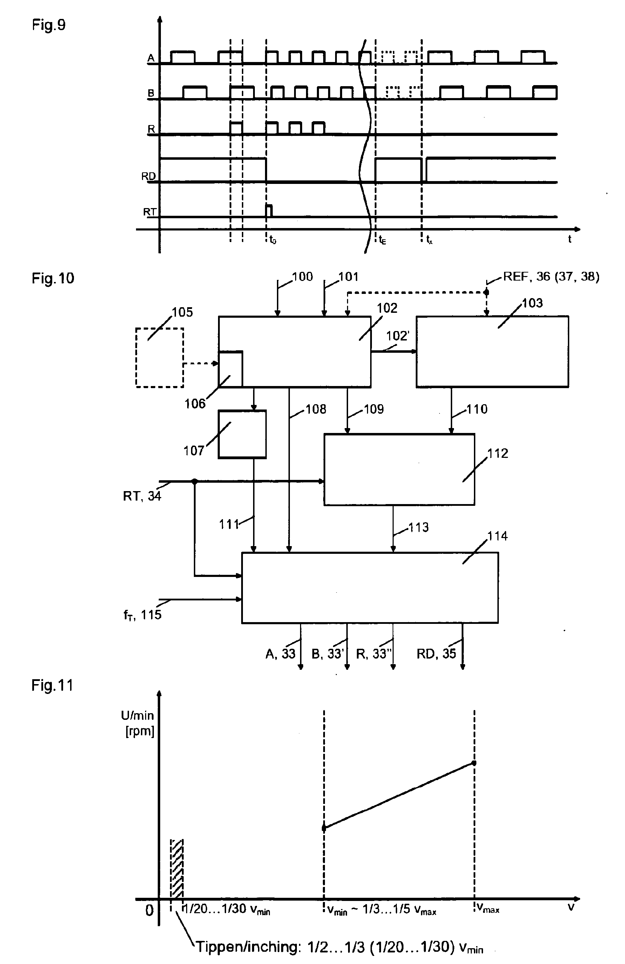

Die externe Veranlassung kann statt mit RT (34) z.B. auch durch NETZ-EIN intern im Messgeber (31) veranlasst und Ausgabe RD (35) über die Signalfrequenz derA-/B-Signale sowie Pulsfolge ermittelt werden, wie sie in den Figuren 7 und 9 näher beschrieben werden. Dann können die Signalpfade RT (34) und RD (35) entfallen.

Wie bereits bei der Beschreibung der Figur 3 vorgebracht, ist die Absolutwertbildung im Messgeber (31) ganz unabhängig von der Ausführung des Maßstabs (12) samt der Abtasteinrichtung und dem gewählten physikalischen Messprinzip der Sensoren. Auch ist es unerheblich für die erfindungsgemäße Anwendung des Messgebers (31), welche Netz- bzw. Hilfsenergie (z.B. Batterie) dafür oder ergänzend zur Bildung von Absolutwerten verwendet werden, und sind daher in der Beschreibung nicht weiter angeführt.

Um den erfinderischen Gedankengang möglichst übersichtlich darzustellen, wurde der Signal- und Datenaustausch zwischen dem Messgeber (31) und der Messverarbeitung (39) leitungsgebunden gewählt. Es wird diese Darstellung beibehalten, obwohl die Signal- und Datenübertragung in jeglicher Ausführung der leitungs- oder nichtleitungsgebundenen Form ausdrücklich unter den erfindungsgemäßen Schutz gestellt wird. Ebenso gehören dazu Funktionen der erfindungsgemäßen Ausführung und Verfahren, die in Kombination der beschriebenen Signal- und Datenübertragungen in kodierter oder unkodierter Form zwischen dem Messgeber (31) und der Messverarbeitung (39) verwendet werden können.

**Figur 5** erläutert eine weitergehende Ausführung des erfindungsgemäßen Messgebers (41) mit den Inkremental-Ausgangssignalen A/B/R (43, 43', 43") zur Messverarbeitung (45) in der Steuerung (5). Dabei dienen Verbindungen einer seriellen Schnittstelle (44) z.B. in bekannter SSI-Konfiguration mit Taktleitung T (44) und Datenleitung D (44) auch als Veranlassung RT und Ausgabe RD zwischen dem Messgeber (41) und Messverarbeitung (45) (gestrichelt in der Figur 5 angedeutet), oder direkt mit der Steuerung (5) verbunden. Damit lässt sich sowohl der in der Figur 4 angegebene erfindungsgemäße Signalaustausch - und nur dafür ist die Eingabe REF (36, 37, 38) notwendig - als auch die erfinderische Kombination von Inkremental-Signalausgabe A/B/R (43, 43', 43") mit serieller Schnittstelle (44) zum Daten- und Parameter-Austausch nach Ausführung in Figur 5 bewerkstelligen. Darüber hinaus erlaubt diese Konfiguration mit bekannten Mitteln auch allein den Austausch von Absolut-Messwerten und Parameter über die serielle Schnittstelle (44), wie sie in Figur 3 beschrieben wurde. Auch sind andere Kombinationen des Signal- und Daten-Austauschs wählbar, z.B. die serielle Schnittstelle (44) in Kombination mit den Inkrementalsignal-Ausgaben, um die in der Patentschrift US 6,667,696 vorteilhafte Absolut-Messverarbeitung zu realisieren. Die in Figur 5 beschriebene Ausführung des Messgebers (41) erlaubt somit die universelle Verwendung der erfindungsgemäßen Inkrementalsignal-Ausgabe mit Veranlassung T (RT) und Ausgabe D (RD) in Kombinationen mit serieller Schnittstelle bis zu bekannten Absolut-Geberausführungen (z.B. Figur 3). Damit ist dieser Messgeber für alle Inkrementalgeber- und fortschrittliche Absolutgeber-Anwendungen zum Austausch von Werten nutzbar und erlaubt wahlweise die vorteilhafte Ausgestaltung mit der erfinderischen Inkremental-Ausgabe von Winkel- bzw. Wegstrecken. Somit können diese Messgeber bei Anwendem zum Einsatz gelangen, die Inkremental- oder bereits zukunftsorientierte Absolut-Signalverarbeitung benutzen. Den Steuerungen mit derzeit noch Inkremental-Signalverarbeitung wird der sukzessive Ausbau mit der erfinderischen Inkremental-Ausführung über Kombination mit der seriellen Schnittstelle bis zur reinen Absolutsignal-Verarbeitung geboten. Somit ist die Umstellung der Steuerung samt Ersatzteilhaltung für langlebige Maschinen und Anlagen mit der erfinderischen Messgeberausführung von Anbeginn für die gesamte Betriebszeit gesichert, und das derzeit vorherrschende Hindernis zum Einsatz der Absolutsignal-Verarbeitung beseitigt.

**Figur 6** ergänzt die vorteilhafte Anwendung der erfinderischen Inkremental-Ausgabe, wie sie in Figur 4 und Figur 5 beschrieben wurde, durch die Bildung von Parallel-Signalausgabe von z.B. 120°-phasenversetzten und 180°-langen Signalen I, II, III (56, 57, 58). Somit entsprechen diese Signal-Pulsfolgen einer vorbestimmten Anzahl inkrementalen Winkel- oder Wegstrecken. Dies ist zweckmäßig für Messgeber (51) mit Eingabe REF (36, 37, 38), Veranlassung RT (54), Ausgabe RD (55) zur Messverarbeitung (59) mit Steuerung (5), wenn die elektronische Kommutierung von Elektromotoren durch den Messgeber (51) durchgehend vorgenommen werden soll und die Inkremental-Messwerte A/B/R nicht permanent zur Auswertung (59, 5) herangezogen werden sollen. Dazu ist auch z.B. ein Inkremental-Maßstab (2) geeignet, wenn die Hilfsenergie bzw. Batterie (Akku) gewährleistet, dass der Absolutmesswert über Inkrementalsignale auch bei ausgeschaltetem Netz gebildet wird.

**Figur 7** beschreibt mittels Signal-Diagramm die erfinderischen Grundfunktionen nach Figur 4. Die oberen Signalpfade stellen die folgerichtigen Inkrement-Ausgaben A/B/R (33, 33', 33") dar. Bei der Erläuterung wird nur eine Bewegungsrichtung und damit A-/B-Folge dargestellt. Die unteren zwei Signalpfade geben die Veranlassung RT (34) und Ausgabe RD (35) im Zeitablauf wieder. Die A-/B-Signale werden bekanntermaßen z.B. von den zwei niederwertigen Bit des Absolutwertes, d.h. der binären Stelle $2^0 + 2^1$, abgeleitet und ausgegeben. Das R-Signal (33') wird z.B. entweder direkt vom Maßstab erfasst oder durch die Eingabe REF (36, 37, 38) in der Logik generiert und separat ausgegeben. Die logischen Verknüpfungen werden im Blockdiagramm der Figur 10 näher erläutert.

Die erfindungsgemäße Ausführung erlaubt die Abfrage des Abstandes der Referenzposition in jeder Istposition und zu jedem Betriebszustand. Der Signalablauf ist zu Beginn in einer Betriebsbewegung mit A-, B- und R-Signalen (33, 33', 33") dargestellt. Es erfolgt die Veranlassung RT (34) zum Zeitpunkt $t_0$, die zweckmäßigerweise durch einen kurzen Impuls von der Messverarbeitung (39) eingeleitet wird. Zu praktisch gleichem Zeitpunkt beginnt die Übertragung der Differenz von der Istposition zur Referenzposition über die Inkremental-Ausgabe der A-/B-Signale. Den Beginn $t_0$ bis zum Ende $t_E$ der Übertragung des Abstands zur Referenzposition wird durch das Signal Ausgabe RD (35) der Messverarbeitung (39) und damit der Steuerung (5) angezeigt. Da die Übertragung endliche Zeit benötigt und die zum Maßstab sich bewegende Abtasteinrichtung des Messgebers (31) dabei die Istposition ändert, werden diese erfassten Inkrementalsignale anschließend ebenfalls mit den A-/B-Signalen mit der Übertragungsfrequenz $f_T$ ausgegeben und sind gestrichelt im Signalpfad A-/B-Signale dargestellt. Danach mündet die Signalübertragung in den Betriebszustand wie vor der Veranlassung RT (34) und in die sich durch die Bewegung ergebende Inkremental-Übertragung der Istposition. Das Ende der Übertragung der Änderung der Istposition zum Zeitpunkt $t_x$ kann z.B. entweder durch kurzen Pegelwechsel im Ausgang RD (35) oder z.B. durch die Änderung der Übertragungsfrequenz $f_T$ der Inkrementalsignale, die höher als die Betriebsfrequenz der A-/B-Signale im Anwendungseinsatz ist, erfasst werden. Mit dieser erfinderischen Signalauswertung werden Punktabfragen zum Zeitpunkt $t_0$ möglich, die für Synchron-Erfassung von Bewegungen im messtechnisch überwachten Stellsystem gefragt sind, insbesondere bei Mehrachsregelungen (z.B. Druckmaschinen, Roboter, usw.). Über die Eingabe REF (36) und damit Festlegung der R-Signale (33") wird nicht näher eingegangen, da es leicht verständlich durch ein Signal REF (36, 37, 38) erfolgt, welches in der Logik des Messgebers (31) den Absolutwert zu diesem Zeitpunkt als Wert für die Referenzposition gespeichert festhält. In der Figur 10 wird ebenfalls darauf eingegangen.

**Figur 8** stellt den Signalablauf nach einer der möglichen Ausführungen in Figur 5 dar. In der Diagrammdarstellung wird der Ablauf der Inkremental-Ausgabe A/B/R (43, 43', 43") in Kombination mit der SSI-Schnittstelle (44) zur Ausgabe der Abweichung zwischen der Istposition zur Referenzposition wiedergegeben. Der Messgeber (41) liefert über die A/B/R-Leitungen die nach der Messgeschwindigkeit sich ergebende Inkrementalsignale. Zum Zeitpunkt $t_0$ der Veranlassung wird über die negative Flanke der Taktsignalleitung T der SSI-Schnittstelle (44) die zu diesem Zeitpunkt $t_0$ sich ergebende Abweichung von der Istposition zur gültigen Referenzposition von der Messverarbeitung (45) bzw. Steuerung (5) abgefragt und über die Taktleitung T diese Abweichung der Inkremente in binärer Form zur Ausgabe mittels Datenleitung D veranlasst. Auf diese bekannte Form mit den üblichen SSI-Festlegungen wird nicht näher eingegangen, weil diese industrieweit bekannt und seit vielen Jahren bei Messgebem zur Anwendung kommen. Das binäre Wort (Anzahl Binärstellen) hat mindestens vom höchsten (MSB) bis zum niedersten (LSB) Bit den Messbereich in Inkremente - z.B. bei Drehgeber mit ~10.000 Inkrementen pro Umdrehung entsprechend $2^{10Bit}$, d.h. 10Bit Stellen - zu übersteigen, um die größtmögliche Abweichung ausgeben zu können. Nach der Abfrage der binären Stellen geht der Messgeber wieder nach der Zeit $t_m$ in den Bereitschafts-Modus für eine mögliche neue Abfrage bzw. Veranlassung zur Bestimmung der Abweichung zur Referenzposition. Erfindungsgemäß wird während der Übertragung der Abweichung der Referenzposition zur Istposition zum Zeitpunkt $t_0$ bis $t_E$ die inkrementelle Übertragung vom Zeitpunkt $t_0$ der sich bewegenden Messeinrichtung folgerichtig mit der Übertragungsfrequenz $f_T$, die höher als die maximale Betriebsfrequenz ist, auf den A/B/R-Signalpfaden an die Messverarbeitung (45) herausgegeben. Damit kann man einfach die Veränderung der Istposition während der Ausgabe über die SSI-Schnittstelle erfassen und sichert auch die inkrementelle Ausgabe der A/B/R-Signale, wenn bei hoher Betriebsgeschwindigkeit die Frequenz der Inkrementalsignale die Übertragungsfrequenz der SSI-Schnittstelle übersteigt. Nach der SSI-Ausgabe wird die Istposition wie üblich über die A/B/R-Inkrementalausgabe im Betriebsablauf ausgegeben. Durch die serielle Schnittstelle sind auch einfach Parameter für den Messgeber, Dateneingaben z.B. für beliebige Referenz-Positionswerte und sonstige Messdaten- und Fehler-Ausgaben möglich, die den Inkremental-Messgeber im Funktionsumfang wesentlich erweitem.

**Figur 9** beschreibt im Zeitablauf die nach Figur 4 beschriebene Messgeber-Ausführung (31) mit Multiturn-Signalauswertung und Ausgabe dieser Werte über den R-Signalpfad (33") nach Veranlassung RT (34) und während Ausgabe RD (35). In diesem Beispiel wird vorausgesetzt, dass die Referenzposition mit dem Ausgangspunkt der Multiturn-Erfassung zusammenfällt, so dass die Abweichung der Istposition zur Referenzposition innerhalb einer Umdrehung mitsamt der ganzen Anzahl der Multiturn-Umdrehungen zusammengesetzt die wahre Abweichung der Multiturn-Istposition zur Referenzposition wiedergibt. Im Diagramm der Figur 7 wurde der Fall Single-Tum mit Inkremental-Ausgabe über die Signalpfade A/B/R erläutert, die hier ebenso stattfinden. Lediglich im R-Signalpfad werden die Multiturnwerte zusätzlich angegeben, die z.B. nacheinander in inkrementaler Zählweise mit der Übertragungsfrequenz $f_T$ an die Messauswertung (59) ausgegeben sowie dort mit den A/B-Inkrementalsignalen als Abweichung der Multitum-Position zum Referenzwert zusammengesetzt und der Steuerung (5) zur Verarbeitung bereitgestellt werden. Sind Multitum-Werte in beiden Richtungen zur Referenz-Position möglich, so benötigt man eine Unterscheidung an dem R-Ausgabekanal (33"). Am einfachsten erreicht man das durch zwei R-Signalpfade, z.B. $R_L$ und $R_R$ (L = links, R = rechts), oder aber über eine kodierte Ausgabe im R-Signalpfad bzw. in Kombination mit den anderen Signalpfaden (A, B; RT, RD), auf die hier aus Übersichtsgründen nicht weiter eingegangen wird.

**Figur 10** beschreibt im Blockdiagramm die Funktionen, wie sie in der Figur 7 mit Bezug auf Figur 4 erläutert wurden. Der Gesamtabsolutwert (102) vom Messgeber (31) setzt sich z.B. aus dem absoluten Basiswert (Grobwert) (100) der kodierten Teilstrecken (inkrementelle Teilung) und dem absoluten Feinwert (101) innerhalb der Teilstrecken zusammen. Dieser Gesamtabsolutwert (102) wird permanent im Messgeber gebildet und steht jederzeit im Betriebszustand zur weiteren Verarbeitung zur Verfügung. Die REF-Eingabe (36, 37, 38) veranlasst die zeitgleiche Übergabe des Gesamtabsolutwertes (102) über die binäre Ausgabe (102') zur Bildung des aktuellen Wertes der Referenzposition (102), so dass dessen Wert ebenfalls im binären verarbeitbaren Datenformat permanent gespeichert zur Verfügung steht. Ebenfalls wird mit der REF-Eingabe (36) im Block der Gesamtabsolutwertbildung (102) diese Referenzposition als Bezugswert zur Bildung von Multitum-Signalen (107) permanent herangezogen und gespeichert. Bei Messgebem (31) mit separaten Multiturn-Erfassungen (105), z.B. bei gewünschter Mutiturn-Erfassung ohne Netzversorgung, werden diese Signale in einer begrenzten und stromsparenden Signalauswertung (106) innerhalb des Blocks der Gesamtabsolutwertbildung (102) z.B. mittels Nutzung von Hilfsenergie erfasst und gespeichert festgehalten. Im Betriebszustand mit Netzbetrieb erfolgt dann die Ausgabe über den Multitum-Signalbilder (107).

Im Normalbetrieb wird permanent der jeweilige Gesamtabsolutwert (102) mit min-destens seinen niedersten zwei binären Stellen ($2^0$, $2^1$) über die Ausgabe (108) einem Zähler- und Phasenbilder-Block (114) zugeführt. Dort werden aus den zwei binären Stellen die bekannte Bildung von A- (33) und 90°-phasenverschobenen B-Signalen (33') vorgenommen. Das R-Signal (33") wird über Erzeugung der Differenz vom zugeführten Gesamtabsolutwert (102, 109) sowie zugeführten absoluten Referenzposition (103, 110) als Abweichung zur Referenzposition (112) und über die Datenverbindung (113) zum Zähler- und Phasenbilder (114) gewonnen, wenn die Differenz Null beträgt. Die phasenkonforme Ausgabe von R (33") als 90°-Signal erfolgt wie bekannt über die logische Verknüpfung mit den A/B-Signalen im Zähler- und Phasenbilder (114).

Die sehr kurze Veranlassung RT (34) bewirkt sofort die Ermittlung der zu diesem Zeitpunkt $t_0$ sich ergebenden Differenz vom Gesamtabsolutwert (102) und gespeicherten Referenzposition (103) als Abweichung zur Referenzposition (112), die als Datenwert (113) an den Zähler und Phasenbilder (114) weitergegeben wird. Gleichzeitig wird über die Veranlassung RT (34) im Zähler und Phasenbilder (114) der Gesamtabsolutwert (102, 108) von der A/B-Signalausgabe getrennt, sowie der Eingang vom Multiturnwert (107, 111) samt Ausgabe RD (35) am Ausgang wirksam geschaltet und über die Taktleitung (115) für die Übertragungsfrequenz $f_T$ die Abweichung zur absoluten Referenzposition (112, 113, 114) über die Signalpfade A (33) und B (33') ausgegeben. Das Gleiche erfolgt für die Multitumwerte (107, 111, 114), die über den Signalpfad R (33") parallel ausgegeben werden. Das Übertragungs-Ende der Abweichung zur absoluten Referenzposition wird einfach durch das Auszählen eines Zählerwertes (114) erreicht, der dem binären Wert der Abweichung (112) und Multiturnwertes (107) entspricht. Wenn der Zählerwert (114) den Wert Null erreicht, so werden danach die Ausgabe RD (35) sowie Multitum-Eingabe (111) gesperrt und die inzwischen aufgelaufene und zählerisch erfasste Istpositions-Abweichung über Gesamtabsolutwert-Eingang (102, 108, 114) sowie Abweichung zur Referenzposition (112, 113, 114) mit $f_T$ getaktet an den A/B-Signalpfaden ausgegeben. Sind auch diese Zähler zum Zeitpunkt $t_x$ ausgezählt, so wird die Übertragungsfrequenz unwirksam und der Normalbetrieb über die Daten-Eingänge vom Gesamtabsolutwert (102, 108) sowie Abweichung zur absoluten Referenzposition (112, 113) über den Zähler und Phasenbilder (114) eingeleitet.

Die in der Figur 10 beschriebene Funktion im Blockdiagramm soll lediglich die erfinderische Ausführung samt Verfahren in den Ansprüchen verdeutlichen. Die digitalen Logik-Funktionen werden ohnehin z.B. in hochkomplexen FPGA-Bausteinen in einer Programmiersprache (z.B. VHDL) beschrieben oder direkt in ASIC umgesetzt. Daher sind verschiedene Logik-Verknüpfungen möglich, die den erfinderischen Grundgedanken mit den geschilderten Funktionsabläufen und Ausführungen entsprechen.

**Figur 11** gibt eine elegante Lösung der erfinderischen Ausführung mit hochauflösender Inkrementalausgabe mittels den A/B-Signalpfaden entsprechend dem Diagramm wieder. Die meisten Produktionsmaschinen in der Industrie haben definierte Betriebszustände, wie z.B. Schleichgang, Tippbewegungen zum Positionieren, und einen Betriebsgeschwindigkeitsbereich von 20%...30% bis 100% der höchsten Produktionsgeschwindigkeit. Die Absolut-Signalverarbeitung mit z.B. digitaler Rechenlogik erlaubt die Erkennung dieser unterschiedlichen Betriebszustände bzw. Betriebsgeschwindigkeiten und kann somit die Winkel- bzw. Weg-Auflösung passend zu den Erfordernissen zur Messwertausgabe bringen. Auch können z.B. dem Messgeber externe Signale zugeführt werden, die diesen gewählten Betriebszuständen entsprechen, um die Messwerte mit bestimmter Winkel- oder Wegauflösung auszugeben. Z.B. bei Offset-Druckmaschinen beträgt die Geschwindigkeit v für

- Betrieb: $v_{min}...v_{max}$
  $v_{min} \sim 1/3...1/5\ v_{max}$
- Schleichgang 1/20 ... 1/30 $v_{min}$
- Tippen 1/2...1/3 (1/20...1/30) $v_{min}$

Damit kann z.B. mit Übertragungsfrequenzen von maximal $f_T$ = 200 kHz der A/B-Signale im Betrieb ($v_{min}...v_{max}$) bei gängigen 10.000 Impulsen pro Umdrehung (= 10 Bit) die Messauflösung beim Schleichgang bzw. Tippen auf über 64.000 Impulse pro Umdrehung ($\geq$16 Bit) erhöht werden, um somit die dort gefragten sehr präzisen Positionierungen bis 1 $\mu$m-Bereich und darunter zu erzielen.

Mit dieser erfindungsgemäßen Ausgestaltung entfallen weitere Nachteile der bisherigen Inkrementalgeber-Ausführungen, und es wird zudem die hochauflösende Positionsabfrage passend zu jedem Betriebszustand ermöglicht.

Diese unter Schutz gestellte Messgeberausführung bietet neben den Umstellungsvorteilen und den zusätzlichen Funktionen samt Sicherheitsüberprüfungen den weiteren Vorteil, dass die externe Messauswertung bzw. Steuerung nicht permanent die Inkrementalsignale erfassen muss, und durch diese Entkopplung die bessere Ausnutzung der Steuerung ermöglicht sowie im beliebig passenden Betriebszustand die Messerfassung aufgenommen werden kann.

Aus Kenntnis der erfinderischen Vorrichtungen und Verfahren sind dem Fachmann weitere Ausführungsformen ableitbar, welche ebenfalls zur Erfindung gehören.

**Patentansprüche**

1. Messgeber-Vorrichtung zur Ermittlung von absoluten Winkel- oder Wegstrecken, **gekennzeichnet durch** im Messgeber befindliche Mittel zu Bildung des Abstandes der Istposition zu einer beliebig vorgegebenen Referenzposition bei Veranlassung und Ausgabe dieses Wertes mittels Inkrementalsignalen.

2. Nach Anspruch 1, enthaltend zusätzliche Mittel zur Erfassung der bei der Übertragung des Abstandes gleichzeitig anfallenden Winkel- oder Wegstrecken in Bezug zur Istposition und Ausgabe dieser Werte.

3. Nach Anspruch 1, enthaltend zusätzliche Mittel zur Erfassung der Ausgabe des Abstandes von Beginn bis deren Ende und Bereitstellung dieser Information zur Auswertung.

4. Nach Anspruch 1, enthaltend zusätzliche Mittel zur Bildung des Abstandes bei Veranlassung in jedem Betriebszustand.

5. Messgeber-Vorrichtung zur Ermittlung von absoluten Winkel- oder Wegstrecken, **gekennzeichnet durch** im Messgeber befindliche Mittel zur Änderung der Auflösung von Messwerten nach vorgegebenen Betriebszuständen und Ausgabe dieser Werte mittels Inkrementalsignalen.

6. Nach Ansprüchen 1 und 5, enthaltend zusätzliche Mittel zur Bildung und Ausgabe mindestens einer Signal-Pulsfolge mit vorbestimmter Anzahl inkrementaler Winkel- oder Wegstrecken.

7. Nach Ansprüchen 1 und 5, enthaltend zusätzliche Mittel zum wählbaren Austausch von Werten durch Inkrementalsignale und/oder serielle Daten.

8. Verfahren zur Ermittlung von absoluten Winkel- und/oder Wegstrecken mit einer Messgeber-Vorrichtung nach Anspruch 1, **dadurch gekennzeichnet, dass** der Abstand der Istposition zu einer beliebig vorgegebenen Referenzposition bei Veranlassung gebildet wird und die Ausgabe dieses Wertes mittels Inkrementalsignalen erfolgt.

9. Verfahren nach Anspruch 8, wobei die bei der Übertragung des Abstandes gleichzeitig anfallenden Winkel- oder Wegstrecken in Bezug zur Istposition erfasst und ausgegeben werden.

10. Verfahren nach Anspruch 8, wobei die Ausgabe des Abstandes von Beginn bis deren Ende erfasst und zur Auswertung bereitgestellt wird.

11. Verfahren nach Anspruch 8, wobei der Abstand bei Veranlassung in jedem Betriebszustand gebildet wird.

12. Verfahren nach Anspruch 5, **dadurch gekennzeichnet, dass** die Auflösungen von Messwerten nach vorgegebenen Betriebszuständen gebildet werden und die Ausgabe mittels Inkrementalsignalen erfolgt.

13. Verfahren nach Ansprüchen 1 und 5, wobei mindestens eine Signal-Pulsfolge nach vorbestimmter Anzahl von inkrementalen Winkel- oder Wegstrecken gebildet und ausgegeben wird.

14. Verfahren nach Ansprüchen 1 und 5, wobei der Austausch von Werten durch Inkrementalsignale und/oder serielle Daten wählbar ist.

Fig.1

Fig.2

Fig.3

Fig. 4

EP 1 666 847 A2

Fig. 5

Fig.6

Fig.7

Fig.8

Fig.9

Fig.10

Fig.11

Tippen/inching: 1/2...1/3 (1/20...1/30) $v_{min}$